# EUROPEAN PATENT APPLICATION

(11) **EP 4 668 513 A1**
(43) Date of publication of application: **24.12.2025**
(21) Application number: 25183264.8
(22) Date of filing: 17.06.2025
(51) Int. Cl.: H02H 3/087

(54) **OVERCURRENT PROTECTION CIRCUIT FOR AN ELECTRICAL SYSTEM OF A VEHICLE**

(30) Priority: 21.06.2024 IT 202400014356
(71) Applicant: IVECO S.P.A., 10156 Torino (IT)
(72) Inventor: RUSSO, Gerardo, 10156 Torino (IT)
(74) Representative: Studio Torta S.p.A.

(57) **Abstract**

An overcurrent protection circuit (10) for an electrical system (1) of a vehicle is disclosed, comprising: a first branch (20A, 20C) having a current-breaking device (23, 25); and a second branch (20B) coupled in parallel to the first branch and having an electric fuse (24). The current-breaking device has a resistive element (30) adapted to be flowed through by a current (Iₚ) of the first branch; detection means (35) for monitoring the current of the first branch; and actuation means (37) for interrupting the flow of the current of the first branch, if the current overcomes a threshold (I_{p,th}) indicative of an overcurrent (Iₘₐₓ).

## Description

### CROSS-REFERENCE TO RELATED APPLICATIONS

This patent application claims priority from Italian patent application no. 102024000014356 filed on June 21, 2024, the entire disclosure of which is incorporated herein by reference.

### TECHNICAL FIELD

The present invention relates to an overcurrent protection circuit for an electrical system of a vehicle, in particular an electric vehicle.

### STATE OF THE PRIOR ART

As it is known, electrical systems, especially those operating at high voltages, are generally provided with overcurrent protection circuits for safety reasons.

In high voltage electrical systems, a malfunction of the circuit can cause a short circuit and consequent flow of high current (overcurrent).

The overcurrent can lead to safety issues, such as voltage arcs, exposure to high voltages or even fire.

Consequently, it is known to provide overcurrent protection circuits formed by a plurality of electrical components configured to interrupt the flow of current in the electrical system, for example meters, electric fuses and pyroswitches, electrically coupled in series with one another.

In an overcurrent protection circuit, both the reaction time of the individual electrical components and the coordination of operation between the electrical components are essential.

However, the Applicant has found that known overcurrent protection circuits do not have sufficiently high performance in specific applications.

For example, known overcurrent protection circuits have a high energy dissipation. In fact, in known overcurrent protection circuits, the total resistance of the overcurrent protection circuit is given by the sum of the electrical resistances of the individual electrical components that form the overcurrent protection circuit.

Furthermore, known overcurrent protection circuits use large electrical components and consequently have high costs and slow reaction times to short circuits.

There is therefore a need to provide an overcurrent protection circuit with improved performance.

The object of the present invention is to meet the above-mentioned needs.

### SUMMARY OF THE INVENTION

The above-mentioned object is achieved by an overcurrent protection circuit, an electrical system, and a vehicle, as defined in the attached claims.

### BRIEF DESCRIPTION OF THE DRAWINGS

For a better understanding of the present invention, a preferred embodiment is described in the following, by way of non-limiting example and with reference to the attached drawings wherein:
- Figure 1 illustrates a simplified block diagram of an electrical system of a vehicle, according to an embodiment of the present invention;
- Figure 2 illustrates a circuit diagram of a portion of an overcurrent protection circuit of the electrical system of Figure **1****;**
- Figure 3 illustrates a circuit diagram of an exemplary electrical model of a portion of the electrical system of Figure **1****;** and
- Figure 4 illustrates an example of simulation of the electrical model of Figure 3.

### DETAILED DESCRIPTION OF THE INVENTION

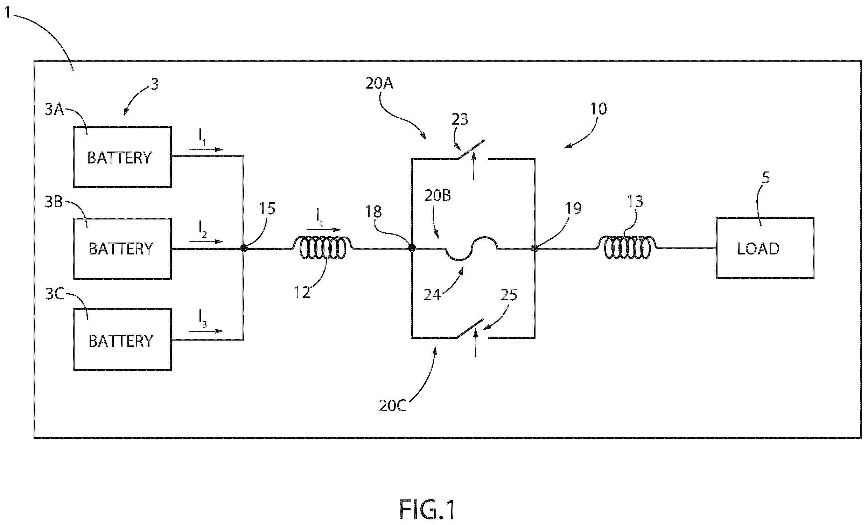

Figure 1 illustrates a block diagram of an electrical system 1 for automotive applications.

In practice, the electrical system 1 is configured to be incorporated into a vehicle, for example a means for transport on roads, rails, or other surfaces, for transporting people and/or goods, for example a private or public transport means.

Preferably, the electrical system 1 is configured to be incorporated into a vehicle with electric or hybrid, in particular electric, propulsion.

The electrical system 1 comprises power supply means formed in this embodiment by a battery pack 3 comprising a plurality of batteries 3A, 3B, 3C, configured to power the electrical system 1.

The electrical system 1 comprises, furthermore, a load 5 electrically coupled to the battery pack 3.

The load 5 may comprise one or more systems, devices, apparatus, etc. of the vehicle that are powered by the batteries 3A-3C.

For example, the load 5 may comprise electrical devices and systems coupled to one or more of the batteries 3A-3C.

The electrical system 1 comprises, furthermore, an overcurrent protection circuit 10, hereinafter also referred to as OCP circuit 10, which is electrically coupled between the batteries 3A-3C and the load 5.

Preferably, the OCP circuit 10 is external to the battery pack 3.

In particular, the OCP circuit 10 is coupled in series between the batteries 3A-3C and the load 5.

In the embodiment of Figure 1, the OCP circuit 10 is coupled to all of the batteries 3A-3C; however, the OCP circuit 10 may be coupled to only some of the batteries 3A-3C.

The electrical system 1 may also have an inductor 12 electrically coupled in series between the batteries 3A-3C and the OCP circuit 10, and an inductor 13 coupled in series between the OCP circuit 10 and the load 5.

The inductors 12, 13 may be for example an equivalent electrical modelling of the electrical connections between the battery pack 3, the OCP circuit 10 and the load 5.

The batteries 3A-3C are coupled to one another at a node 15 of the electrical system 1.

In detail, the batteries 3A-3C are coupled in parallel with one another with respect to the node 15, so that the total current It at the node 15 is a sum of the currents I₁, I₂, I₃ supplied (or received) by the batteries 3A, 3B, 3C, respectively.

The OCP circuit 10 comprises at least two circuit branches arranged in parallel.

In detail, the OCP circuit 10 has a first node 18 and a second node 19 and the circuit branches of the OCP circuit are arranged in parallel between the first and second nodes 18, 19.

In particular, the OCP circuit 10 comprises three circuit branches 20A, 20B, 20C arranged in parallel between the first and second nodes 18, 19.

In practice, the OCP circuit 10 is configured to receive the total current It at the first node 18.

The OCP circuit 10 is configured to interrupt the electrical continuity between the batteries 3A-3C and the load 5 (and therefore the flow of the total current It), when the total current It overcomes a safety value Iₘₐₓ.

The safety value Iₘₐₓ is indicative of an overcurrent in the electrical system 1. For example, the safety value Iₘₐₓ may be indicative of a short circuit condition in the electrical system 1.

In the embodiment of Figure 1, the inductor 12 is coupled between the nodes 15 and 18, and the inductor 13 between the node 19 and the load 5.

The circuit branch 20B comprises an electric fuse 24 configured to be flowed through by the current flowing through the circuit branch 20B.

The electric fuse 24 has a threshold current I_{th,f} and is configured, when flowed through by a current equal to or higher than the threshold current I_{th,f}, to melt (in particular to develop sufficient heat to melt the electric fuse 24) and, consequently, to interrupt the flow of current through the circuit branch 20B.

In the absence of an overcurrent in the electrical system 1, namely, for It < Iₘₐₓ, the electric fuse 24 has a resistance R_{F}.

The electric fuse 24 can be designed, when flowed through by a current equal to or higher than the threshold I_{th,f}, to melt quickly, for example in a time lower than 100 µs.

The branches 20A, 20C each comprise a respective current-breaking device 23, 25 configured to interrupt a flow of current in the respective branch 20A, 20C.

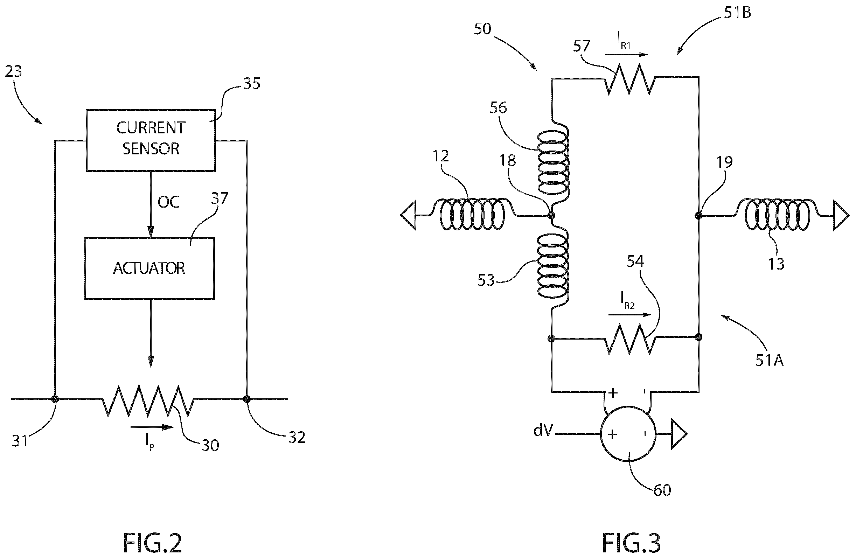

The current-breaking devices 23, 25 each comprise a respective resistive element 30, detection means 35 and actuation means 37, coupled together, as disclosed in detail in the following with reference to Figure 2.

The resistive element 30 is arranged between two nodes 31, 32. The nodes 31, 32 may be for example the nodes 18 and 19 of the OCP circuit 10, respectively.

The resistive element 30 may be of a type known per se, for example a fixed or adjustable resistor, for example a metal bar or other type.

In the absence of an overcurrent in the electrical system 1, the resistive element 30 has a resistance Rₚ.

According to a preferred embodiment, the resistance Rₚ is less than the resistance R_{F} of the electric fuse 24. In particular, the resistance Rₚ can be much less than the resistance R_{F}, so that the total current, in the absence of overcurrent, flows only, at least as a first approximation, through the resistive element 30 and not through the electric fuse 24, with consequent energy savings.

In the embodiment of Figure 2, the detection means 35 is formed by a current sensor 35.

For example, the current sensor 35 can be an analog, digital or mixed-signal sensor.

The current sensor 35 is configured to monitor the current Iₚ flowing through the resistive element 30.

In particular, the current sensor 35 is configured to measure the current Iₚ; detect when the current Iₚ overcomes a threshold value I_{p,th}; and, in response to overcoming the threshold, provide an actuation signal OC to the actuation means 37.

The threshold I_{p,th} is indicative of an overcurrent, for example a short circuit condition of the electrical system 1; i.e., it is indicative of the condition It ≥ Iₘₐₓ.

The value of the threshold I_{p,th} may be equal to or different from that of the maximum safety current Iₘₐₓ, depending on the specific configuration of the OCP circuit 10, for example the number of circuit branches in parallel and the specific circuit configuration of the OCP circuit 10.

The actuation means 37 are configured to interrupt the flow of the current Iₚ through the resistive element 30, if the current Iₚ overcomes the threshold I_{p,th}.

In particular, the actuation means 37 may comprise an actuator configured to receive the OC signal and, in response, interrupt the flow of current through the resistive element 30.

For example, the actuator 37 may increase the resistance Rₚ.

In particular, the actuator 37 may be configured to break the resistive element 30, so as to interrupt the electrical continuity between the nodes 31, 32 and therefore block the flow of current through the respective circuit branch. In practice, the resistive element 30 can become an open circuit.

For example, according to one embodiment, the actuator 37 may be a pyrotechnic actuator.

In practice, according to one embodiment, the current-breaking device 23, 25 may be a pyroswitch or pyrofuse. This may allow to obtain low reaction times to a short circuit and low energy consumption in the absence of a short circuit.

The device 25 may have a general structure similar to that of the device of Figure 2, and therefore is not described further in detail.

The devices 23 and 25 may be the same or different from one another, depending on the specific design needs.

For example, the respective resistances Rₚ and thresholds I_{p,th} may be the same or different from one another, depending on the specific design needs. The presence of both current-breaking devices 23, 25 may simplify the design of the OCP circuit 10 and improve the performance thereof.

According to one embodiment, the OCP circuit 10 is designed so that, in the presence of an overcurrent, the current-breaking devices 23, 25 interrupt the flow of current in the respective branch 20A, 20C, before the electric fuse 24 interrupts the flow of current through the respective branch 20B. This can help improve the safety and effectiveness of the OCP circuit 10.

In particular, the OCP circuit 10 can be designed so that the electric fuse 24 melts (and thus interrupts the flow of current in the circuit branch 20B) in response to the interruption of the flow of current in the circuit branches 20A, 20C.

For example, for this purpose, one or more of the following parameters of the OCP circuit 10 can be adapted, at the design stage: number of current-breaking devices and electric fuses in parallel; values of the resistances Rₚ, R_{F}; current thresholds I_{p,th}, I_{f,th}; etc.

In use, in the absence of overcurrent (Iₜ < Iₜₕ), the resistance Rₚ of the devices 23 and 25 is much lower than the resistance R_{F} of the electric fuse 24. Consequently, at least as a first approximation, all the total current It flows through the devices 23, 25 and does not flow through the fuse 24.

In the event of a short circuit, namely, when Iₜ ≥ Iₜₕ, the current sensors 35 of the devices 23 and 25 detect that the current Iₚ overcomes the respective threshold I_{p,th} and, consequently, the actuators 37 block the flow of current through the nodes 31, 32.

When the actuators 37 interrupt the flow of current through the respective resistive elements 30 (namely, the respective resistance Rₚ increases becoming, at least as a first approximation, an open circuit), the total current It is diverted through the electric fuse 24.

The electric fuse 24 is designed so that, when the total current It is diverted to the branch 20B due to the increase in the resistances Rₚ, the total current It is sufficient to melt the electric fuse 24.

Consequently, the electric fuse 24 interrupts the flow of current also through the circuit branch 20B.

In practice, the OCP circuit 10 interrupts the flow of current between the battery pack 3 and the load 5.

The parallel arrangement of at least one of the current-breaking devices 23, 25 and the electric fuse 24 can allow to obtain high performances of the OCP circuit 10 in terms of energy consumption and reaction times to a short circuit.

For example, the fact that the electric fuse 24 is not, at least at a first approximation, flowed through by current in the normal operating condition (in the absence of overcurrent) allows that the electric fuse 24 does not actually contribute to the energy dissipation of the electrical system 1.

Consequently, the electric fuse 24 can be chosen, in the design step, to be small in size and inexpensive.

Therefore, the OCP circuit 10 and the electrical system 1 can have reduced dimensions and costs.

At the same time, in the normal operating condition, the total current It flows, at least as a first approximation, only through the devices 23, 25 that have a low resistance. This can further contribute to lowering the dissipation of the electrical system 1.

Furthermore, the arrangement in parallel, and not in series, of at least one of the current-breaking devices 23, 25 and the electric fuse 24 also allows to obtain high values of the maximum safety current Iₘₐₓ. In fact, the diversion of the total current It on the circuit branch 20B in response to the interruption of the circuit branches 20A, 20C, allows to avoid the formation of a voltage arc in the branches 20A, 20C. The electrical system 1 therefore has a high effectiveness and rapid interruption of the current between the nodes 18, 19, in response to a short circuit.

By way of example, Figure 3 shows a circuit model 50 of the OCP circuit 10.

In detail, of the OCP circuit 10, the branches 20A and 20C are modelled by a branch 51A comprising an inductor 53 and a resistor 54; and the branch 20B is modelled by a branch 51B comprising an inductor 56 and a resistor 57.

The optional inductors 53, 56 can model the electrical connections of the respective branches 20A-20C. For example, the inductors 53, 56 may have a lower inductance than the inductors 12, 13.

The resistor 54, having a resistance R₂ increasing as time increases, models the devices 23, 25.

The resistor 57, having a constant or substantially constant resistance R₁, models the fuse 24.

A voltage generator 60 is used to simulate the presence of a short circuit at time t=0s.

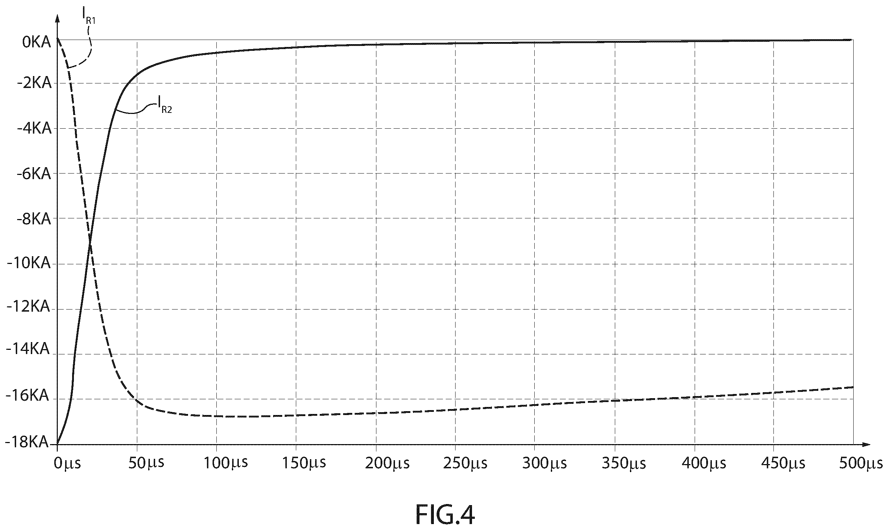

Figure 4 shows an example of simulation of the currents I_{R1} e I_{R2} of the circuit of Figure 3, wherein I_{R1} is the current flowing in the branch 51B and I_{R2} is the current flowing in the branch 51A.

Figure 4 shows an example of the mechanism of diversion of the current It between the devices 23, 25 and the fuse 24, in response to a short circuit event.

At time t=0s, all the current of the OCP circuit 50 flows through the first branch 51A, namely, through the resistor 54 (I_{R2} maximum, in absolute value, and I_{R1} zero) .

However, in response to the short circuit, the resistance R₂ of the resistor 54 begins to increase as time increases. Consequently, the current I_{R2} decreases and the current I_{R1} increases.

Finally, it is clear that changes and alternatives can be made to the overcurrent protection circuit and to the electrical system according to the present invention, which however do not go beyond the scope of protection defined by the claims.

For example, the branch 20A or the branch 20C can be absent, or the OCP circuit 10 can have a greater number of branches in parallel.

For example, the branches 20A-20C can have additional electrical elements, depending on the specific application.

For example, the electric fuse 24 may generically indicate one or more fuse elements coupled in series or in parallel with one another, depending on the design specifications.

For example, other electrical elements may be coupled to the OCP circuit 10, not shown here, for the operation of the electrical system 1.

## Claims

1. An overcurrent protection circuit (10) for an electrical system (1) of a vehicle, the overcurrent protection circuit comprising:
a first circuit branch (20A, 20C) comprising a current-breaking device (23, 25); and
a second circuit branch (20B) coupled in parallel to the first circuit branch and comprising an electric fuse (24),
wherein the current-breaking device (23, 25) comprises a resistive element (30) adapted to be flowed through by a current (Iₚ) of the first circuit branch; detection means (35) for monitoring the current (Iₚ) of the first circuit branch; and actuation means (37) for interrupting the flow of the current of the first circuit branch, if the current overcomes a threshold (I_{p,th}) indicative of an overcurrent (Iₘₐₓ).

2. The overcurrent protection circuit according to claim 1, wherein, in absence of an overcurrent, the resistive element (30) has a resistance (Rₚ) lower than a resistance (R_{F}) of the electric fuse (24).

3. The overcurrent protection circuit according to claim 1 or 2, wherein the actuation means comprises an actuator (37) configured to break the resistive element (30).

4. The overcurrent protection circuit according to the preceding claim, wherein the actuator is a pyrotechnic actuator.

5. The overcurrent protection circuit according to any of the preceding claims, wherein the current-breaking device is a pyroswitch.

6. The overcurrent protection circuit according to any of the preceding claims, wherein the electric fuse (24) has a threshold current (I_{th,f}), is adapted to be flowed through by a current (I_{F}) of the second circuit branch and is adapted to melt if the current of the second circuit branch is equal to or higher than the threshold current, thereby interrupting the flow of the current of the second circuit branch, the overcurrent protection circuit being designed so that the current-breaking device (23, 25) interrupts the flow of the current (Iₚ) of the first circuit branch before the electric fuse (24) interrupts the flow of the current of the second circuit branch.

7. The overcurrent protection circuit according to any of the preceding claims, comprising a first node (18) and a second node (19) couplable to the electrical system (1) of the vehicle, the overcurrent protection circuit being adapted to be flowed through by a total current (It) between the first node and the second node and to interrupt the flow of the total current between the first node and the second node if the total current overcomes a safety value (Iₘₐₓ) indicative of the overcurrent.

8. The overcurrent protection circuit according to any of the preceding claims, not comprising a series-type electrical coupling between an electric fuse and a current-breaking device comprising a respective resistive element (30), respective detection means (35) and respective actuation means (37).

9. The overcurrent protection circuit according to any of the preceding claims, wherein the current-breaking device is a first current-breaking device (23), the overcurrent protection circuit further comprising a third circuit branch (20C) comprising a second current-breaking device (25),
wherein the second current-breaking device (25) comprises a respective resistive element (30) adapted to be flowed through by a current of the third circuit branch; respective detection means for monitoring the current of the third circuit branch; and respective actuation means for interrupting the flow of the current of the third circuit branch, if the current of the third circuit branch overcomes a threshold indicative of the overcurrent (Iₘₐₓ).

10. An electrical system (1) for a vehicle, comprising an overcurrent protection circuit (10) according to any of the preceding claims.

11. The electrical system according to the preceding claim, further comprising power supply means (3A-3C) and load means (5), wherein the overcurrent protection circuit (10) is coupled in series between the power supply means and the load means.

12. The electrical system according to the preceding claim, wherein the power supply means comprises a plurality of batteries (3A-3C), the overcurrent protection circuit being arranged in series to the plurality of batteries.

13. A vehicle comprising an electrical system according to any of the claims 10-12.
